# EUROPEAN PATENT APPLICATION

(11) **EP 3 939 947 A1**
(43) Date of publication of application: **19.01.2022**
(21) Application number: 20185958.4
(22) Date of filing: 15.07.2020
(51) Int. Cl.: C04B 24/16, C04B 24/24, C04B 24/26, C04B 28/14

(54) **CLAY BLOCKING ADDITIVES FOR GYPSUM COMPOSITIONS**

(71) Applicant: SIKA TECHNOLOGY AG, 6340 Baar (CH)
(72) Inventor: Velten, Ulf, 8955 Oetwil an der Limmat (CH); Weinkauf, Annette, 8048 Zürich (CH); Hampel, Christina, 5406 Rütihof (CH); Weidmann, Jürg, 8404 Winterthur (CH); Frunz, Lukas, 8305 Dietlikon (CH); Juilland, Patrick, 3005 Bern (CH)
(74) Representative: Sika Patent Attorneys

(57) **Abstract**

A comb polymer is used as an inerting agent for swelling clays and/or non-swelling clays in gypsum compositions, said comb polymer comprises:
a) at least one poly(alkylene oxide) side chain-bearing monomer unit **M1** without ionic groups,
b) optionally at least one cationic monomer unit **MC,** wherein the molar ratio of the cationic monomer units **MC** to the side chain-bearing monomer units **M1** is equal to or less than 10,
c) optionally at least one anionic monomer unit **MA,** wherein the molar ratio of the anionic monomer units **MA** to the side chain-bearing monomer units **M1** is less than 1, preferably equal to or less than 0.5,
c) optionally, at least one non-ionic monomer unit **M3**, wherein the molar ratio of the non-ionic monomer units **M3** to the side chain-bearing monomer units **M1** is less than 5.

## Description

### Technical field

The invention relates to the use of a comb polymer as an inerting agent for swelling and/or non-swelling clays in gypsum compositions. Additionally, the invention is concerned with a gypsum composition comprising the comb polymer. Further aspects of the invention are related to a method, in particular for plasticizing a gypsum composition.

### Background art

Dispersants or superplasticizers are used in the building industry as plasticizers or water-reducing agents for mineral binder compositions, such as for example concrete, cement mortar, plaster or lime mortar. The dispersants are generally organic polymers which are added to the mixing water or admixed with the binder compositions in solid form. In this way, it is advantageously possible to alter both, the consistency of the binder composition during processing and the properties in the hardened state.

Known particularly effective dispersants are, for example, polymers based on polycarboxylate ethers (PCE). Polymers of this kind have a polymer backbone and side chains bonded thereto. Corresponding polymers are described, for example, in EP 1 138 697 A1 (Sika AG).

Besides cement, gypsum is one of the most frequently used and well-known mineral binder materials used in construction industry. For example, gypsum is used as base material for various plasters and screeds as well as for producing wallboards and gypsum blocks.

Gypsum is a naturally occurring mineral which is widely mined in various countries. Additionally, synthetic gypsum can be recovered via flue-gas desulfurization (FGD) in coal-fired power plants.

Whereas synthetic gypsum (FDG gypsum) has a monomineralic composition, the quality (i.e., the amount of impurifications) of natural gypsum may vary depending on the local geology.

Especially, if natural gypsum is contaminated with clays, i.e., swelling and non-swelling clays, a remarkable impact on the workability can be observed during processing of fluid gypsum compositions. This is especially true if plasticizers like PCEs are used to achieve workability requirements of specific processes or applications.

Specifically, the performance of PCEs in fluid gypsum compositions is negatively affected because (i) PCEs may be intercalated and/or absorbed by swelling clays and/or (ii) because PCEs may be adsorbed on the surfaces of non-swelling clays. Consequently, a significant proportion of the PCEs added to the gypsum composition is lost and cannot adsorb anymore onto gypsum particles. Therefore, the desired water-reducing or plasticizing effect of the PCEs is reduced or even lost. Consequently, the flowability of fluid gypsum compositions with a given PCE dosage is significantly reduced.

Additionally, the water absorption capacity of swelling and non-swelling clays has to be taken into account. The hydrophilic surfaces and interlayer spaces of clays may adsorb water and, thus, reduce the water content in fluid gypsum compositions further. Due to the lower content of free water in the fluid gypsum composition the flowability of gypsum paste is reduced too.

There are different approaches known to mitigate the negative effects of clays in gypsum compositions. For example, higher PCE dosage can be used to compensate the loss of PCE performance, or special additives being able to reduce or block the influence of clays can be added. Such blocking additives are frequently also called clay blockers.

Although increasing the PCE dosage is in principle a straightforward solution, this is economically inefficient and can be problematic if the amount of clays is fluctuating. In this case, producers of gypsum products are constantly forced to monitor the amount of clays, and subsequently adjust the PCE dosage in order to keep a certain flowability, which is costly and highly time-consuming. Furthermore, PCEs typically affect the setting time of the gypsum compositions which is undesired in production processes.

Regarding the so called clay blockers, there are various approaches known nowadays. For example, WO 2010/005117 A1 (W.R. Grace) describes a method in which polycationic compounds in combination with a hydroxycarboxylic acid or a salt thereof are used to enhance slump retention in cements and concretes having clay-bearing aggregates, wherein the clay otherwise absorbs or diminishes the efficiency of polycarboxylate superplasticizers.

WO 2016/096970 A1 (BASF SE) describes a method of inhibiting the swelling of clay in subterranean formations with a polyimidazolium compound. However, polycations, such as polyimidazolium compounds frequently have chlorides as counter-ions which can be problematic in view of possible corrosion of steel reinforcement in concrete. Furthermore, such polycations are usually poorly miscible with standard PCEs.

Finally, WO 2011/107704 (Lafarge) discloses an organic molecule with a cationic charge density of less than 0.5 meq/g, preferably a polyvinyl alcohol, to offset the adverse effects of clays. However, the efficiency of these molecules is limited.

Additionally, there are products used for concrete production on the market with clay-blocking properties which are based on a strong water-reducing effect. Products sold by BASF under the brand "MasterSuna" can be mentioned here.

However, these approaches have to be improved regarding effectiveness, robustness toward fluctuations of clays, compatibility with other gypsum admixtures or with regard to their chloride content.

There is thus a need to develop new and improved solutions which reduce or overcome the aforementioned drawbacks.

### Disclosure of the invention

It is an objective of the present invention to provide substances and methods which allow for reducing or preventing problems with clays in gypsum compositions. Thereby, preferably, problems caused by swelling clays as well as problems caused by non-swelling clays shall both be reduced or prevented independently of the nature of the clays. Desirably, the substances or methods shall reduce the negative influence of clays on the effectiveness of dispersants, in particular of PCE-based dispersants. Preferably, the duration of action should be as long as possible. Especially, the substances or methods shall be as effective as possible while having a best possible robustness. Preferably, the substances or methods as such shall affect the flowability of mineral binder compositions as little as possible. Also, preferably, the substances and methods should be as insensitive as possible with regard to fluctuating swelling and non-swelling clay contents in mineral binder compositions. Particularly, the substances or methods shall be compatible with common additives used for producing gypsum compositions, or with corresponding processes, respectively. Especially, the substances or methods shall be compatible with lignosulfonates, gluconates, naphthalenesulfonates, sulfonated naphthalene-formaldehyde condensates, melamine sulfonates, vinyl copolymers, sulfonated vinyl copolymers, and/or polycarboxylates, especially polycarboxylate ethers. In particular, the substances or methods shall be compatible with PCE-based dispersants. Also, the substances or methods should have a content of chloride as low as possible or should be substantially free from chloride.

Surprisingly, it has been found that the problem of the invention can be solved by the features of claim 1. Thus, the core of the invention is the use of a comb polymer as inerting agent for swelling clays and/or non-swelling clays in a gypsum composition, said comb polymer comprising:
a) at least one poly(alkylene oxide) side chain-bearing monomer unit **M1** without ionic groups,
b) optionally at least one cationic monomer unit **MC,** wherein the molar ratio of the cationic monomer units **MC** to the side chain-bearing monomer units **M1** is equal to or less than 10,
c) optionally at least one anionic monomer unit **MA,** wherein the molar ratio of the anionic monomer units **MA** to the side chain-bearing monomer units **M1** is less than 1, preferably equal to or less than 0.5,
d) optionally, at least one non-ionic monomer unit **M3,** wherein the molar ratio of the non-ionic monomer units **M3** to the side chain-bearing monomer units **M1** is less than 5.

As has been shown, the inventive comb polymers allow for a highly efficient reduction of the negative influence of swelling clays and non-swelling clays on the effectiveness of dispersants, in particular of PCE-based dispersants, in gypsum compositions containing swelling and/or non-swelling clays. Thereby, the inventive solution turned out to be highly robust and the comb polymers only have little effect on the flowability of the gypsum compositions. Specifically, the dosage of the comb polymer according to the invention is rather uncritical, especially if a certain threshold has been reached. Therefore, fluctuating contents of swelling and non-swelling clays in mineral binder compositions are much less of an issue with the inventive comb polymers. Thus, the comb polymers according to the invention can be used as clay-inerting or clay-blocking agents, especially in combination with PCE-based dispersants.

It is a further advantage of the comb polymers of the present invention that they show a much lower retarding effect in gypsum compositions when compared to commonly used clay-blocking additives, such as e.g. products from the MasterSuna range.

Specifically, the comb polymers according to the invention typically have a rather high grafting density of poly(alkylene oxide) side chains, which is in particular higher than the grafting density of usual PCE-based dispersants. Without being bound by theory, it is believed that comb polymers according to the invention intercalate in swelling clays via their side chains and adsorb on the surface of swelling and non-swelling clays and efficiently cover these surfaces.

In view of this theory, single poly(alkylene oxide) side chains, such as e.g. methyl polyethylene glycols, which are not part of a comb polymer structure should as well be good blocking additives. Nevertheless, it was surprisingly found that the comb polymers according to the invention are much better blocking additives when compared to single poly(alkylene oxide) side chains. Even when using the same or higher dosages of single poly(alkylene oxide) side chains, these single side chains are not able to reduce or prevent intercalation of PCE-based dispersants to the same extent as the inventive comb polymers.

Moreover, the inventive comb polymers turned out to be at least as efficient as known blocking additives such as polycations or like known blocking additives having a strong plasticizing effect.

Further aspects of the invention are the subject matter of other independent claims. Especially preferred embodiments of the invention are the subject matter of the dependent claims.

### Ways of carrying out the invention

A first aspect of the invention relates to the use of a comb polymer as inerting agent for swelling clays and/or non-swelling clays in a gypsum composition, said comb polymer comprising:
a) at least one poly(alkylene oxide) side chain-bearing monomer unit **M1** without ionic groups,
b) optionally at least one cationic monomer unit **MC**, wherein the molar ratio of the cationic monomer units **MC** to the side chain-bearing monomer units **M1** is equal to or less than 10, especially less than 5,
c) optionally at least one anionic monomer unit **MA,** wherein the molar ratio of the anionic monomer units **MA** to the side chain-bearing monomer units **M1** is less than 1, preferably equal to or less than 0.5,
d) optionally, at least one non-ionic monomer unit **M3,** wherein the molar ratio of the non-ionic monomer units **M3** to the side chain-bearing monomer units **M1** is less than 5.

Preferably, said comb polymer comprises:
a) at least one poly(alkylene oxide) side chain-bearing monomer unit **M1** without ionic groups,
b) optionally at least one cationic monomer unit **MC,** wherein the molar ratio of the cationic monomer units **MC** to the side chain-bearing monomer units **M1** is equal to or less than 0.1, preferably less than 0.05,
c) optionally at least one anionic monomer unit **MA,** wherein the molar ratio of the anionic monomer units **MA** to the side chain-bearing monomer units **M1** is less than 1, preferably equal to or less than 0.5,
d) optionally at least one non-ionic monomer unit **M3** wherein the molar ratio of the non-ionic monomer units **M3** to the side chain-bearing monomer units **M1** is less than 5, preferably equal to or less than 3.

Thereby, the monomer units **M1, MC, MA** and **M3** differ from each other chemically and/or structurally. In particular, the at least one non-ionic monomer unit **M3** does note comprise poly(alkylene oxide) groups, especially it does not comprise poly(ethylene oxide) groups.

Within the present context, a "polymer" is a substance comprising or consisting of at least 2, especially at least 3, preferably at least 5, polymerized monomer units.

A "comb polymer" is a polymer comprising a polymer backbone and side chains bonded thereto.

Within the present context a "PCE" is a polycarboxylate ether. Polycarboxylate ethers are frequently being used as superplasticizers for mineral binders. PCE are described, for example, in EP 1 138 697 A1. Especially, PCE superplasticizers are structurally different from the comb polymers of the present invention. This is because PCEs are designed to have the effect of plastifying a given gypsum composition, measurable as increased flow, whereas comb polymers of the present invention do not show a significant plastification. Preferably, a PCE is thus a superplasticzer or polymer **P** as described below. The comb polymers according to the invention can be combined with standard PCE without the risk of too strong plastification in case of varying amounts of clays present.

The term "gypsum composition" means a composition containing at least 30 wt.-%, preferably at least 50 wt.-%, even more preferably at least 70 wt.-%, or 100 wt.-%, of gypsum, relative to the total weight of the binder in the composition. Thus, "gypsum compositions" mean in particular compositions which contain mainly sulfate binders.

The term "gypsum" refers to any known form of gypsum, in particular calcium sulfate dihydrate, calcium sulfate α-hemihydrate, calcium sulfate β-hemihydrate, or calcium sulfate anhydrite or mixtures thereof.

In a preferred embodiment, the gypsum is calcium sulfate β-hemihydrate. The gypsum composition preferably includes at least 70 wt. % calcium sulfate β-hemihydrate, even more preferably at least 90 wt. % calcium sulfate β-hemihydrate, relative to the total weight of the binder in the gypsum composition. Such kind of gypsum compositions based on calcium sulfate β-hemihydrate can for example be used for manufacturing gypsum plasterboard panels.

The term "binder" denotes a mineral binder which reacts in the presence of water in a hydration reaction to form solid hydrates or hydrate phases. This can be, for example, a hydraulic binder, a latent hydraulic binder, and/or a pozzolanic binder.

Thus, the term "binder" includes, besides gypsum, other hydraulic-setting materials such as, for example, cement, in particular Portland cement or high-alumina cement and respectively their mixtures with fly ash, silica fume, slag, granulated slag, and limestone filler or quicklime.

However, in a preferred embodiment, relative to the total weight of binder in the gypsum composition, a proportion of binders other than gypsum, especially cement, is below 30 wt.-%, especially below 10 wt.-%, preferably below 5 wt.-%. Most preferred the gypsum composition is cement-free.

The terms "clay-inerting agent", "clay-blocking agent" and "clay blocker" are meant to be agents capable of reducing or inhibiting adverse effects of swellable clays and/or non-swellable clays on the effectiveness of dispersants, in particular of PCE-based dispersants, in gypsum compositions.

The terms "swelling clay" or "swelling clays" stand in particular for clay minerals which expand and/or increase their volume when wetted by aqueous solutions. Structurally talking, swelling clays are layered silicate minerals and, more specific, phyllosilicate minerals based on tetrahedral MO₄ sheets (M = Si⁴⁺, Al³⁺) and octahedral M(O, OH)₆ sheets (M = Al³⁺, Mg²⁺, Fe^{2+/3+}, etc.). They differ inter alia from each other by their way of stacking the tetrahedral and octahedral sheets, which strongly influences their capacity of adding or losing water molecules or cations from their structure. Swelling clays are part of the 2:1 clay group. These are clays in which an octahedral sheet (O) is sandwiched between two tetrahedral sheets (T) forming an elementary unit, in this case a T-O-T layer. The elementary units are bound to each other, forming a stack of layers. The bonding is a result of the formation of an interlayer between two elementary units, called the Z-sheet, which in swelling clays contains cations that will hold the two layers together. Weathering of rocks is an important natural process enhancing the formation of these minerals. The formation of swelling clays due to weathering of minerals may take place either during the source rock alteration, during the transportation processes, or directly at the depositional site, e.g. river banks where they may be found later in the aggregates, e.g. sand aggregates. Swelling clays that can be formed are for example minerals from the smectite group, such as montmorillonite, nontronite, beidellite, saponite, hectorite and sauconite. Other swelling clays, which are not explicitly mentioned here, are also encompassed by the term "swelling clay", e.g. vermiculites.

Thus, in particular, the comb polymers according to the present invention are used in compositions comprising such swelling clays, especially montmorillonite, nontronite, beidellite, saponite, hectorite, sauconite, and/or vermiculites.

Especially, the swelling clays are clays which are part of the 2:1 clay group. Hence, in particular, the comb polymers according to the present invention are used in compositions comprising such swelling clays which are part of the 2:1 clay group.

The term "non-swelling clay" stands in particular for phyllosilicate minerals which do not expand and/or increase their volume when wetted by aqueous solutions or water. Structurally talking, non-swelling clays are layered silicate minerals and, more specifically, phyllosilicate minerals based on tetrahedral MO₄ sheets (M = Si⁴⁺, Al³⁺) and octahedral M(O, OH)₆ sheets (M = Al³⁺, Mg²⁺, Fe^{2+/3+}, Ca²⁺, Ba²⁺, Mn^{2+/3+/4+}). They differ from each other by the order of stacking of tetrahedral and octahedral sheets. The elementary units are bound to each other, forming a stack of layers. The bonding is a result of the formation of an interlayer between two elementary units. Substitution of Si⁴⁺ cations by cations with a charge <+4 within the tetrahedral and/or substitution of usually Al³⁺ cations by cations with a charge ≤+3 within the octahedral sheets leads to charge imbalances which strongly influence the cation exchange capacity of such layered silicates. The non-swellable phyllosilicates can be further divided based on their structural set-up into 1:1 minerals (tetrahedral-octahedral), e.g. kaolinite, serpentine, 2:1 minerals (tetrahedral-octahedral-tetrahedral), e.g. micas, palygorskite, sepiolite, and 2:1:1 minerals (tetrahedral-octahedral-tetrahedral- hydroxide octahedral, with one or both of the octahedral sheets being dominated by Mg²⁺), e.g. chlorite. Interlayer-deficient micas are part of the 2:1 mineral group comprising minerals such as illite, glauconite, celadonite, and phengite. Charge-balanced 2:1 layer-silicates include minerals such as talc or pyrophyllite. The most common non-swelling layer-silicates are neutral minerals, minerals with a high interlayer charge which is greater than 0.6-0.8 per Si₄O₁₀ and/or minerals that are part of the 2:1:1 mineral group.

Non-swelling clays can be formed either due to weathering of minerals, as is the case for e.g. kaolinite and illite, or due to magmatic and/or metamorphic processes, as is the case for e.g. biotite, phengite, and muscovite. The latter group of minerals is mostly found in source rocks, such as e.g. granite or gneiss, from which the manufactured sands are produced. The formation of non-swelling clays due to weathering of minerals may take place either during the source rock alteration, during the transportation processes, or directly at the depositional site, e.g. river banks. Other non-swelling clays, which are not explicitly mentioned here, are also encompassed by the term "non-swelling clays". Thus, in particular, the comb polymers according to the present invention are used in compositions comprising such non-swelling clays, especially kaolinite, serpentine, palygorskite, sepiolite, talc, pyrophyllite, chlorites, mica such as muscovite or biotite, interlayer-deficient mica like illite, glauconite, celadonite, and phengite.

Typically, if present, the total amount of clays, especially the total amount of swelling and non-swelling clays, in the gypsum composition is 0.01 - 10 wt.-%, especially 0.1 - 8 wt.-%, with respect to the dry weight of the gypsum composition.

The terms "ionic group" or "ionic groups" especially mean groups that, at least at a pH > 10, especially at least at a pH > 12, are present in negatively charged form or in positively charged form. In the present context, groups present in negatively charged form are called "anionic groups". Groups present in positively charged form are called "cationic groups". Thereby, counter ions which are solely bound by ionic bonding are not to be considered with regard to the charge of the ionic groups.

The terms "cationic monomers" and "cationic monomer units" especially mean monomers or polymerized monomers that, at least at a pH > 10, especially at least at a pH > 12, are present in positively charged form. Thereby, counter ions which are bound by ionic bonding are not to be considered with regard to the charge of the "cationic monomers" or the "cationic monomer units".

Likewise, the terms "anionic monomers" and "anionic monomer units" especially mean monomers or polymerized monomers that, at least at a pH > 10, especially at least at a pH > 12, are present in negatively charged form. Also in this case, counter ions which are bound by ionic bonding are not to be considered with regard to the charge of the "anionic monomers" or the "anionic monomer units".

Especially, anionic monomers are monomers comprising anionic groups such as e.g. hydrogen donor groups or acid groups. The anionic groups are more preferably acid groups, for example carboxylic acid, sulfonic acid, phosphoric acid and/or phosphonic acid groups. Preference is given to carboxylic acid groups. The anionic groups or acid groups may also take the form of anions in deprotonated form or of a salt with a counter ion or cation.

Cationic monomers are monomers comprising cationic groups. Thereby, the cationic group is covalently attached to the cationic monomer. It may be a common cationic group which can be attached to organic polymers, in particular an ammonium, sulfonium and/or phosphonium group. The cationic groups may also take the form of a salt with a counter ion or anion.

The cationic group is in particular grafted onto the backbone of the comb polymer. This means that it is not part of the main chain or backbone of the comb polymer. Therefore, it does not connect subunits of the main chain to one another. Thereby it differs, for example, from the condensates of dimethylamine and epichlorohydrin of US 2007/0287794 A1.

The terms "non-ionic monomers" and "non-ionic monomer units" especially mean monomers or polymerized monomers which do not have any ionic groups, in particular they neither have any anionic groups nor any cationic groups. Especially, the non-ionic monomers, at a pH > 10, especially at a pH > 12, are present in uncharged form.

Also, the at least one poly(alkylene oxide) side chain-bearing monomer unit **M1** does not comprise any ionic groups, in particular it neither has any anionic groups nor any cationic groups. Especially, the at least one poly(alkylene oxide) side chain-bearing monomer unit **M1** does not comprise any carboxylic acid, sulfonic acid, phosphoric acid, and phosphonic acid groups and/or the at least one poly(alkylene oxide) side chain-bearing monomer unit **M1** does not comprise any ammonium, sulfonium and/or phosphonium groups, in particular quaternary ammonium groups.

Especially, the at least one poly(alkylene oxide) side chain-bearing monomer unit **M1,** at a pH > 10, especially at a pH > 12, is present in uncharged form.

Especially, the at least one poly(alkylene oxide) side chain-bearing monomer unit **M1** is bonded to the polymer backbone via ester, ether, amide and/or imide groups. The at least one poly(alkylene oxide) side chain-bearing monomer unit **M1** preferably includes poly(ethylene oxide) side chains, poly(propylene oxide) side chains and/or poly(ethylene oxide/propylene oxide) side chains. In particular, the number average molecular weight of the poly(alkylene oxide) side chains is in the range of 100 - 10'000 g/mol, especially 250 - 5'000 g/mol, preferably 500 - 3'500 g/mol, in particular 900 - 2'500 g/mol, for example 950 -1'500 g/mol or 1'000 - 1'400 g/mol.

Particularly, the side chain-bearing monomer unit **M1** includes a structure of the formula I: 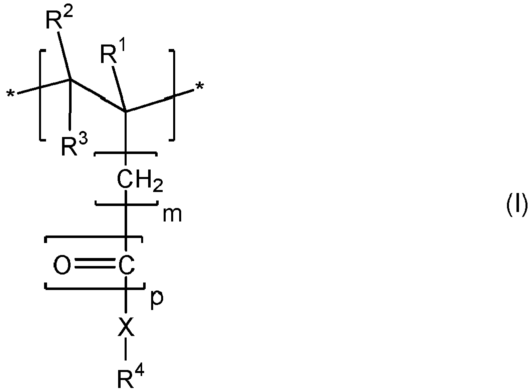 where
R¹, and R², in each case independently, are H or an alkyl group having 1 to 5 carbon atoms, preferably H or CH₃ or mixtures thereof,
R³, in each case independently, is H, an alkyl group having 1 to 5 carbon atoms, preferably H or CH₃ or mixtures thereof, or a group with formula -(CH₂)ₘ-[C=O]ₚ-X-R₄,
m = 0, 1 or 2,
p = 0 or 1,
X, in each case independently, is -O- or -NH-,
R⁴ is a group of the formula -[AO]ₙ-R^{a}
   where A = C₂- to C₄-alkylene, R^{a} is H, a C₁- to C₂₀-alkyl group, -cycloalkyl group or -alkylaryl group,
and n = 2-250, especially 10-200, in particular 15 - 50 or 20 - 25.

More particularly, R¹ = H or CH₃ and R² = R³ = H.

The X group in monomer units **M1,** advantageously in at least 75 mol%, particularly in at least 90 mol%, especially in at least 95 mol% or at least 99 mol% of the total number of monomer units **M1,** is -O- (= oxygen atom).

In a further advantageous embodiment, m = 0, p = 1 and preferably X = -O-. In this case it is possible to prepare the copolymer on the basis of (meth)acrylic esters which are commercially available.

In another advantageous embodiment, m = 0 - 2, p = 0 and preferably X = -O-. Thereby, it is possible to prepare the copolymer on the basis of vinyl ether, (meth)allyl ether or isoprenyl ether monomers which are commercially available.

In a particularly advantageous embodiment, R¹ is a mixture of 40-60 mol% of H and 40-60 mol% of -CH₃.

The R⁴ moiety in the side chain-bearing monomer units **M1,** based on the total number of R⁴ moieties in the monomer units, in particular consists of a poly(ethylene oxide), especially to an extent of at least 50 mol%, especially at least 75 mol%, preferably at least 95 mol% or at least 99 mol%.

The proportion of ethylene oxide units, based on the total number of alkylene oxide units in the copolymer, is especially more than 75 mol%, especially more than 90 mol%, preferably more than 95 mol% and specifically 100 mol%.

More particularly, R⁴ has essentially no hydrophobic groups, especially no alkylene oxides having three or more carbon atoms. This especially means that the proportion of alkylene oxides having three or more carbon atoms based on the total number of alkylene oxides is less than 5 mol%, especially less than 2 mol%, preferably less than 1 mol% or less than 0.1 mol%. In particular, there are no alkylene oxides having three or more carbon atoms present, i.e. the proportion thereof is 0 mol%.

R^{a} is advantageously H and/or a methyl group. Particularly advantageously, A = C₂-alkylene and R^{a} is H or a methyl group.

More particularly, n = 10-150, especially n = 15-100, preferably n = 17-70, specifically n = 19-45 or n = 20-25. In particular, this achieves excellent blocking effects.

Particular preference is given to copolymers in which R¹ is selected from the group consisting of H, -CH₃, and mixtures thereof; R² and R³ = H; R⁴, based on the total number of R⁴ moieties in the monomer units, consists of a poly(ethylene oxide) especially to an extent of at least 50 mol%, especially at least 75 mol%, preferably at least 95 mol% or at least 99 mol%; and X in at least 75 mol%, particularly in at least 90 mol%, especially in at least 99 mol%, of the total number of monomer units **M1** is -O-.

According to a preferred embodiment, the cationic group of the cationic monomer unit **MC** in the comb polymer includes or consists of an ammonium group, a sulfonium group and/or or a phosphonium group, in particular a quaternary ammonium group.

In a preferred embodiment of the invention, the cationic group is an ammonium group. Particularly preferably it is a quaternary ammonium group. In this case, a positively charged nitrogen atom is substituted with four organic groups Preferably, the cationic group has formula -N⁺R¹⁰R¹¹R¹², wherein R¹⁰, R¹¹ and R¹² are independently of one another H, an aliphatic hydrocarbon moiety having 1 to 20 C atoms, a cycloaliphatic hydrocarbon moiety having 5 to 8 C atoms and/or an aryl moiety having 6 to 14 C atoms. As indicated by the hyphen, the positively charged nitrogen atom in the group of formula -N⁺R¹⁰R¹¹R¹² is chemically or covalently bonded, optionally via a chemical linker group, to the cationic monomer. Preferably, R¹⁰, R¹¹ and R¹² are not H, particularly preferably selected from methyl and ethyl.

Especially, the cationic monomer unit **MC** in the polymer includes or consists of a cationic monomer which has a structure of the formula II: 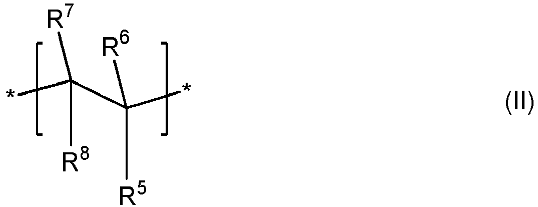 where
R⁵, in each case independently, is -[D]_{d}-[E]ₑ-F, with
   D = -(COO)- and/or -(CONH)-,
   E = an alkylene group having 1 to 5 carbon atoms,
   F = -N⁺R¹⁰R¹¹R¹², -S⁺R¹⁰R¹¹R¹² and/or -P⁺R¹⁰R¹¹R¹²,
      wherein R¹⁰, R¹¹ and R¹² are independently of one another H, an aliphatic hydrocarbon moiety having 1 to 20 C atoms, a cycloaliphatic hydrocarbon moiety having 5 to 8 C atoms and/or an aryl moiety having 6 to 14 C atoms;
   whereby
   d = 0 or 1,
   e = 0 or 1,
R⁶, R⁷ and R⁸, in each case independently, are H or an alkyl group having 1 to 5 carbon atoms.

Thereby, preferably, R⁶ = H or CH₃, R⁷ = R⁸ = H, d = 1 and, especially D = -(COO)-.

According to a preferred embodiment, F = -N⁺R¹⁰R¹¹R¹², e = 1 and, preferably E = an alkylene group having 2 to 3 carbon atoms.

In a preferred embodiment of the invention, the ionic monomer is selected from [2-(acryloyloxy)-ethyl]trimethylammonium chloride, [2-(acryloylamino)-ethyl]trimethylammonium chloride, [2-(acryloyloxy)-ethyl]trimethy-lammoniummethosulfate, [2-(methacryloyloxy)-ethyl]trimethylammonium chloride or methosulfate, [3-(acryloylamino)-propyl]trimethylammonium chloride, [3-(methacryloylamino)-propyl]trimethylammonium chloride.

Particularly advantageous according to the invention proved to be the use of [2-(methacryloyloxy)-ethyl]trimethylammonium salts, in particular the chloride. The use is commercially available from Evonik Industries, DE (under the brand name "Visiomer TMAEMC") or from Sigma-Aldrich, DE.

In a further preferred embodiment, an anionic group of the anionic monomer unit **MA** in the comb polymer includes or consists of a carboxylic acid, sulfonic acid, phosphoric acid and/or phosphonic acid group.

Preferably, the anionic monomer unit **MA** in the polymer includes or consists of an anionic monomer which has a structure of the formula III 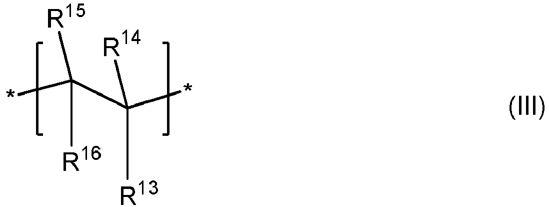 where
R¹³, in each case independently, is -COOM, -SO₂-OM, -O-PO(OM)₂ and/or-PO(OM)₂,
R¹⁴ and R¹⁵, in each case independently, are H or an alkyl group having 1 to 5 carbon atoms,
R¹⁶, in each case independently, are H, -COOM or an alkyl group having 1 to 5 carbon atoms,
or where R¹³ forms a ring together with R¹⁶ to give -CO-O-CO-,
M independently from each other is H⁺, an alkali metal ion, an alkaline earth metal ion, a di- or trivalent metal ion, an ammonium ion and an organic ammonium group.

More particularly, R¹³ = COOM, R¹⁴ = H or CH₃, R¹⁵ = R¹⁶ = H. It is thus possible to prepare the copolymer on the basis of acrylic or methacrylic acid monomers, which is of interest from an economic point of view.

Likewise advantageously, R¹³ = COOM, R¹⁴ = H, R¹⁵ = H and R¹⁶ = COOM. Corresponding comb polymers can be prepared on the basis of maleic acid monomers.

It may further be advantageous if the comb polymer comprises at least one further non-ionic monomer unit **M3** which especially differs chemically and/or structurally from the monomer units **M1, MC** and **MA.** In particular, multiple different further monomer units **M3** may be present. In this way, it is possible to further modify the properties of the comb polymer and to adjust them, for example, with regard to specific applications.

Particularly advantageously, the non-ionic monomer unit **M3** a monomer unit of the formula IV: 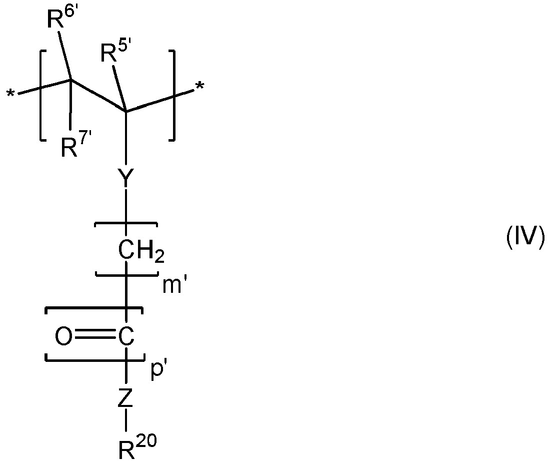
where R^{5'}, R^{6'}, R^{7'} in each case independently, are H or an alkyl group having 1 to 5 carbon atoms, and m' and p' are the same as defined for m and p as described above in the context of the copolymer;
Y, in each case independently, is a chemical bond or -O-;
Z, in each case independently, is a chemical bond, -O- or -NH-;
R²⁰, in each case independently, is an alkyl group, cycloalkyl group, alkylaryl group, aryl group, hydroxyalkyl group or acetoxyalkyl group, each having 1-20 carbon atoms.

Advantageous examples of non-ionic monomer units **M3** are those where m' = 0, p' = 0, Z and Y represent a chemical bond and R²⁰ is an alkylaryl group having 6-10 carbon atoms.

Also suitable are especially further monomer units **M3** in which m' = 0, p' = 1, Y is -O-, Z represents a chemical bond and R²⁰ is an alkyl group having 1-4 carbon atoms.

Further suitable are further monomer units **M3** where m' = 0, p' = 1, Y is a chemical bond, Z is -O- and R²⁰ is an alkyl group and/or a hydroxyalkyl group having 1-6 carbon atoms.

Particularly advantageously, the non-ionic monomer unit **M3** consists of polymerized vinyl acetate, styrene and/or hydroxyalkyl (meth)acrylate, especially styrene.

According to a preferred embodiment, the comb polymer, with respect to the total number of monomer units present in the comb polymer, comprises 20 - 100 mol-%, in particular 50 - 100 mol-%, especially 65 - 100 mol-%, for example 80 - 100 mol-% or 95 - 100 mol-%, of the at least one poly(alkylene oxide) side chain-bearing monomer unit **M1.**

Especially, a preferred comb polymer, with respect to the total number of monomer units present in the comb polymer, comprises:
a) 95 - 100 mol-%, especially 97 - 100 mol-%, particularly or 98 - 100 mol-%, preferably 99.5 mol-%, of the at least one poly(alkylene oxide) side chain-bearing monomer unit **M1,**
b) 0 - 1 mol-%, especially 0 - 0.1 mol-%, preferably 0 mol-%, of the at least one cationic monomer unit **MC,**
c) 0 - 1 mol-%, especially 0 - 0.1 mol-%, preferably 0 mol-%, of the at least one anionic monomer unit **MA,**
d) 0 - 1 mol-%, especially 0 - 0.1 mol-%, preferably 0 mol-%, of the at least one non-ionic monomer unit **M3.**

In such or other preferred comb polymers,
- the molar ratio of the cationic monomer units **MC** to the side chain-bearing monomer units **M1** is equal to or less than 0.5, especially less than or equal to 0.1, in particular less than or equal to 0.01 or 0.
- the molar ratio of the anionic monomer units **MA** to the side chain-bearing monomer units **M1** is equal to or less than 0.5, especially less than or equal to 0.1, in particular less than or equal to 0.01 or 0.
- the molar ratio of the non-ionic monomer units **M3** to the side chain-bearing monomer units **M1** is equal to or less than 0.5, especially less than or equal to 0.1, in particular less than or equal to 0.01 or 0.

In particular, the comb polymer, with respect to the total number of monomer units present in the comb polymer, comprises 100 mol-% of the at least one poly(alkylene oxide) side chain-bearing monomer unit **M1.** In this case, the comb polymer can be a homopolymer of identical side chain-bearing monomeric units **M1** or a copolymer of at least two different side chain-bearing monomeric units **M1.**

Such comb polymers are for example preferred if the comb polymer comprises side chain-bearing monomer units **M1** including or consisting of a structure of formula I as shown above wherein parameter p is equal to 1. These are for example poly(alkylene oxide) (meth)acrylate based monomer units **M1.**

According to another preferred embodiment, the comb polymer essentially consists of the at least one poly(alkylene oxide) side chain-bearing monomer unit **M1** and the non-ionic monomer unit **M3.** In this case the comb polymer is a copolymer based on the at least one side chain-bearing monomeric units **M1** and the non-ionic monomer unit **M3.**

Such comb polymers are for example preferred if the comb polymer comprises side chain-bearing monomer units **M1** including or consisting of a structure of formula I as shown above wherein parameter p is equal to 0. These are for example poly(alkylene oxide) alkenyl ether-based monomer units **M1.**

For example, a preferred comb polymer, with respect to the total number of monomer units present in the comb polymer, comprises:
a) 30 - 70 mol-%, especially 40 - 60 mol-%, particularly or 40 - 50 mol-%, of the at least one poly(alkylene oxide) side chain-bearing monomer unit **M1,** and
b) 0 - 1 mol-%, especially 0 - 0.1 mol-%, preferably 0 mol-%, of the at least one cationic monomer unit **MC,**
c) 0 - 1 mol-%, especially 0 - 0.1 mol-%, preferably 0 mol-%, of the at least one anionic monomer unit **MA,**
d) 30 - 70 mol-%, especially 40 - 60 mol-%, particularly or 40 - 50 mol-%, of the at least one non-ionic monomer unit **M3.**

In such or other preferred comb polymers,
- the molar ratio of the cationic monomer units **MC** to the side chain-bearing monomer units **M1** is equal to or less than 0.5, especially less than or equal to 0.1, in particular less than or equal to 0.01 or 0.
- the molar ratio of the anionic monomer units **MA** to the side chain-bearing monomer units **M1** is equal to or less than 0.5, especially less than or equal to 0.1, in particular less than or equal to 0.01 or 0.
- the molar ratio of the non-ionic monomer units **M3** to the side chain-bearing monomer units **M1** is 0.1 - 5, especially 0.5 - 2.5, in particular 0.8 - 2 or 1 - 1.5.

In a further preferred embodiment, the comb polymer comprises the at least one cationic monomer **MC.** Thereby, preferably, the comb polymer consists to an extent of at least 30 mol%, particularly at least 50 mol%, in particular at least 65 mol%, especially at least 90 mol% or 95 mol%, of side chain-bearing monomer units **M1** and the cationic monomer units **MC,** with respect to the total number of monomer units present in the comb polymer. The remaining monomer units can e.g. be the non-ionic monomer units **M3.** Especially, the comb polymer consists of the at least one poly(alkylene oxide) side chain-bearing monomer units **M1** and the at least one cationic monomer units **MC.**

For example, a further preferred comb polymer, with respect to the total number of monomer units present in the comb polymer, comprises:
a) 10 - 99 mol-%, especially 40 - 95 mol-%, particularly or 50 - 75 mol-%, of the at least one poly(alkylene oxide) side chain-bearing monomer unit **M1,** and
b) 1 - 90 mol-%, especially 5 - 60 mol-%, preferably 25 - 50 mol-%, of the at least one cationic monomer unit **MC,**
c) 0 - 1 mol-%, especially 0 - 0.1 mol-%, preferably 0 mol-%, of the at least one anionic monomer unit **MA,**
d) 0 - 75 mol-%, especially 5 - 60 mol-%, particularly 25 - 50 mol-% or 0 mol-%, of the at least one non-ionic monomer unit **M3.**

In such or other preferred comb polymers,
- the molar ratio of the cationic monomer units **MC** to the side chain-bearing monomer units **M1** is 0.1 - 5, especially 0.5 - 2.5, in particular 0.8 - 2 or 1 - 1.5,
- the molar ratio of the anionic monomer units **MA** to the side chain-bearing monomer units **M1** is equal to or less than 0.5, especially less than or equal to 0.1, in particular less than or equal to 0.01 or 0,
- the molar ratio of the non-ionic monomer units **M3** to the side chain-bearing monomer units **M1** is 0 - 5, especially 0.1 - 2.5, in particular 0.5 - 2 or 0.8 - 1.5.

Thereby, in particular, the molar ratio of the anionic monomer units **MA** to the cationic monomer units **MC** is in the range of 0 - 1, especially 0 - 0.9, in particular 0- 0.5 or 0 - 0.05.

In an especially preferred embodiment, the comb polymer is a block copolymer, whereby at least 75 mol-%, especially at least 90 mol-%, preferably at least 99 mol-%, of the total number of at least one side chain-bearing monomer units **M1** are arranged in a first block of the block copolymer.

In particular, the block copolymer comprises a second block in which at least 75 mol-%, especially at least 90 mol-%, preferably at least 99 mol-%, of the total number of at least one cationic monomer units **MC** are arranged.

In a further preferred embodiment, between the first block and the second block, there is a third block comprising at least one side chain-bearing monomer unit **M1,** at least one cationic monomer unit **MC** and/or at least one non-ionic monomer unit M3. Especially, the third block has a non-random distribution of the monomer units **M1** and/or the cationic monomer units **MC** in a direction along the polymer backbone.

A "non-random distribution" is understood in the present case to mean a non-statistical distribution of the monomer units **M1** and/or the monomer units **MC.** This means that the side chain-bearing monomer units **M1** and/or the ionic units **MC** are arranged in the third block, for example, in an alternating manner and/or in a gradient structure.

The structure of the copolymers can be analyzed and determined, for example, by nuclear magnetic resonance spectroscopy (NMR spectroscopy). By ¹³C and ¹H NMR spectroscopy in particular, the sequence of the monomer units in the copolymer can be determined on the basis of neighboring group effects in the copolymer and by using statistical evaluations.

In all of the structures described above, non-ionic monomer units **M3** may be added, for example in order to control the density of the other monomeric units in the comb polymer and/or in order to adjust the comb polymer for specific needs.

Preferably, if used, the molar proportion of the non-ionic monomer units **M3,** with respect to the total number of the monomeric units in the comb polymer, is from 0.0001 - 50 mol-%, in particular 0.0002 - 30 mol-%, especially 0.001 - 25 mol-%, advantageously 0.1 -10 mol-% or 1 - 9 mol-%. This is in particular valid for block copolymers.

The comb polymer is especially prepared by free-radical polymerization, e.g. by conventional free-radical polymerization or by controlled free-radical polymerization (also called living free-radical polymerization). These polymerization techniques are well known to the skilled person.

Thereby, unilaterally ethylenically unsaturated poly(alkylene oxide) side chain-bearing monomer units **M1'** according to formula V, optionally at least one unilaterally ethylenically unsaturated ionic monomer unit **MC'** and/or **MA'** according to formula VI and/or VII and, optionally, at least one unilaterally ethylenically unsaturated non-ionic monomer unit **M3'** according to formula VIII, are polymerized together such that the molar ratio of the cationic monomer units **MC** to the side chain-bearing monomer units **M1** is equal to or less than 10, especially less than 5, the molar ratio of the anionic monomer units **MA** to the side chain-bearing monomer units **M1** is less than 1, preferably equal to or less than 0.5, and the molar ratio of the non-ionic monomer units **M3** to the side chain-bearing monomer units **M1** is less than 5.

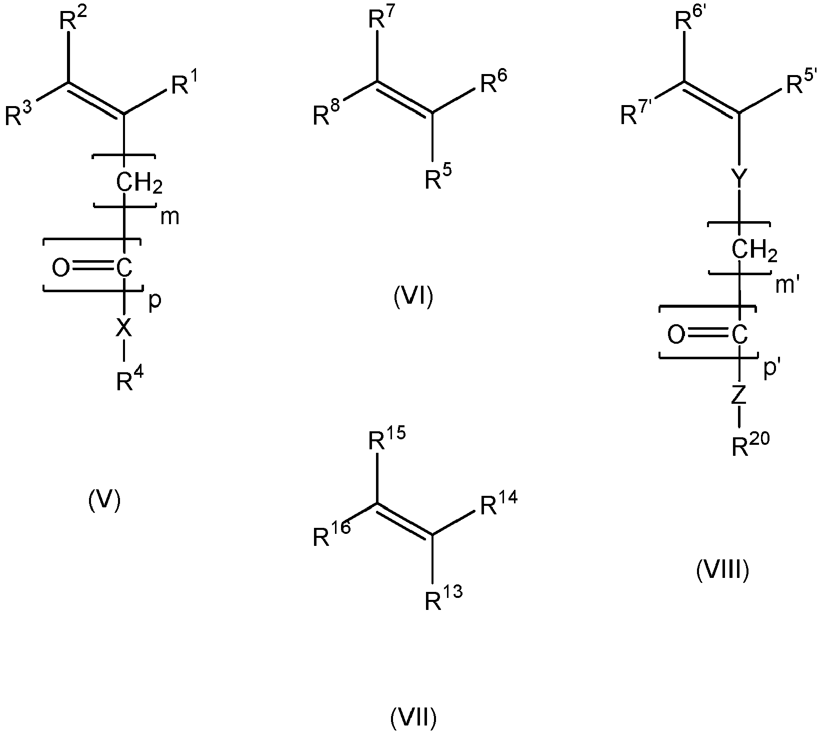

Thereby, R¹ - R¹⁶, R^{5'} - R^{7'}, R²⁰, X, Y, Z, m, m', n and p, p' are defined as described above.

According to a highly preferred embodiment, the comb polymer is a comb polymer which is obtainable or obtained by conventional free-radical polymerization.

Among controlled free-radical polymerization techniques, reversible addition-fragmentation chain-transfer polymerization (RAFT), nitroxide-mediated polymerization (NMP) and/or atom transfer radical polymerization (ATRP) can be used.

In reversible addition-fragmentation chain-transfer polymerization, control over the polymerization is achieved by a reversible chain transfer reaction. Specifically, a growing free-radical chain adds to what is called a RAFT agent, which leads to formation of an intermediate free radical. The RAFT agent then fragments, in such a way as to reform another RAFT agent and a free radical available for propagation. In this way, the probability of propagation is distributed uniformly over all chains. The average chain length of the polymer formed is proportional to the RAFT agent concentration and to the reaction conversion. RAFT agents used are especially organic sulfur compounds. Particularly suitable are dithioesters, dithiocarbamates, trithiocarbonates and/or xanthates. The polymerization can be initiated in a conventional manner by means of initiators or thermal self-initiation.

In nitroxide-mediated polymerization, nitroxides react reversibly with the active chain end to form what is called a dormant species. The equilibrium between active and inactive chain ends is strongly to the side of the dormant species, which means that the concentration of active species is very low. The probability of two active chains meeting and terminating is thus minimized. An example of a suitable NMP agent is the substance with Chemical Abstract number 654636-62-1, commercially available e.g. under the tradename "Blockbuilder MA".

In atom transfer radical polymerization (ATRP), the concentration of free radicals is lowered by addition of a transition metal complex and a controlling agent (halogen-based) to such an extent that chain termination reactions, such as disproportionation or recombination, are very substantially suppressed.

In the present context, reversible addition-fragmentation chain-transfer polymerization (RAFT) has been found to be particularly preferable, especially if block copolymers are to be produced.

The initiator used for the polymerization is more preferably an azo compound and/or a peroxide as free-radical initiator, which is at least one representative selected from the group consisting of dibenzoyl peroxide (DBPO), di-tert-butyl peroxide, diacetyl peroxide, azobisisobutyronitrile (AIBN), α,α'-azodiisobutyramidine dihydrochloride (AAPH) and/or azobisisobutyramidine (AIBA).

If the polymerization is effected in an aqueous solution or in water, α,α'-azodiisobutyramidine dihydrochloride (AAPH) is advantageously used as initiator.

For control of the polymerization, in particular, one or more representatives from the group consisting of dithioesters, dithiocarbamates, trithiocarbonates and/or xanthates are used.

It has additionally been found to be advantageous if the polymerization is effected at least partly, preferably fully, in an aqueous solution.

In a second method known as polymer-analogous reaction, a polycarboxylic acid backbone is synthesized in a first step. Subsequently, side chains are attached to the polycarboxylic acid backbone, for example by esterification, amidation or etherisation reactions with alcohols, amines and the like. Such polymer-analogous reactions, as well as resulting comb polymers, are described, for example, in WO 97/35814, WO 95/09821, DE 100 15 135 A1, EP 1 138 697 A1, EP 1 348 729 A1 and WO 2005/090416. Details about the polymer-analogous reaction are disclosed, for example, in EP 1 138 697 B1 on page 7, line 20 to page 8, line 50, as well as in its Examples, or in EP 1 061 089 B1 on page 4, line 54 to page 5, line 38 as well as in its Examples.

For formation of copolymers having block and/or gradient structures, unilaterally ethylenically unsaturated poly(alkylene oxide) side chain-bearing monomer units M1' and ethylenically unsaturated ionic monomer units **MC'** and/or **MA'** and/or the ethylenically unsaturated non-ionic monomer units **M3'** are preferably at least partly added at different times.

In a further preferred embodiment, in the polymerization, in a first step a), a portion of the monomer units **M1'** is converted or polymerized and, after reaching a predetermined conversion, in a second step b), the as yet unconverted monomer units **M1'** (if present) are polymerized together with ionic monomer unit **MC'** and/or **MA'** and/or the non-ionic monomer unit **M3'.** Step a) is especially effected essentially in the absence of ionic monomer units **MC'** and/or **MA'** and **M3'.**

In this way, in a simple and inexpensive manner, a copolymer having a section consisting essentially of polymerized monomer units **M1'** followed by a section having a gradient structure is preparable.

It is advantageous here to conduct steps a) and b) in immediate succession. In this way, it is possible to maintain the polymerization reaction in steps a) and b) to the best possible degree.

The polymerization in step a) is especially conducted until 0.1 - 100 mol%, especially 1 - 95 mol%, preferably 10 - 90 mol%, in particular 25 - 85 mol%, especially 60 - 85 mol% of monomer units **M1'** have been converted or polymerized.

The conversion of the monomers or the progress of the polymerization can be monitored in a manner known per se, for example, with the aid of liquid chromatography, especially high-performance liquid chromatography (HPLC).

Preferably, the comb polymer is used with a proportion of 0.01 - 10 wt.-%, preferably 0.05 - 5 wt.-%, more preferably 0.1 - 2 wt.-%, especially 0.25 - 1 wt.-%, with respect to the weight of the binder in the gypsum composition.

In a further preferred embodiment, the comb polymer is used in combination with a plasticizer for mineral binder compositions. Thereby, plasticizer and comb polymer differ from a chemical and/or structural point of view. The comb polymer and the plasticizer can for example be provided as a kit of parts or in the form of a premixed composition.

What is meant by the term "plasticizer" in the present context is especially a substance which is capable of improving the flowability of a gypsum composition which has been mixed with water, and/or of reducing the water requirement of such compositions. Substances of this kind are also referred to as "superplasticizers".

More particularly, the plasticizer comprises at least one representative from the group consisting of lignosulfonates, gluconates, naphthalenesulfonates, sulfonated naphthalene-formaldehyde condensates, melamine sulfonates, vinyl copolymers, sulfonated vinyl copolymers, polycarboxylates, especially polycarboxylate ethers, or mixtures thereof.

More particularly, the plasticizer is a polycarboxylate, especially a polycarboxylate ether. It is more preferably a comb polymer having a polycarboxylate backbone and polyether side chains, where the polyether side chains are bonded to the polycarboxylate backbone via ester, ether, amide and/or imide groups. More particularly, the polycarboxylate has a random, statistical, blockwise, alternating or gradient-like monomer distribution.

More preferably, the plasticizer is a polymer **P** having or consisting of the following substructure units:
a) a molar parts of a substructure unit **S1** of the formula X 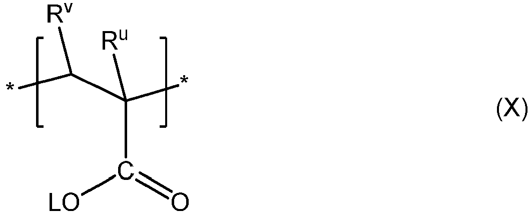
b) b molar parts of a substructure unit **S2** of the formula XI 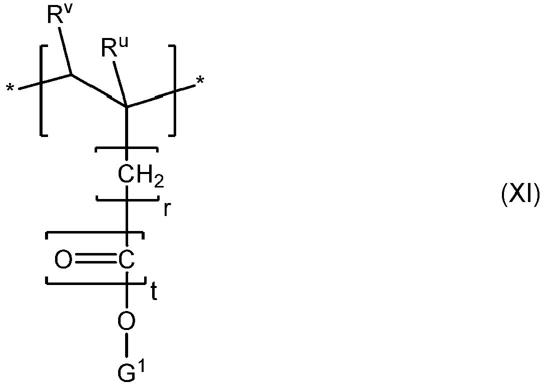
c) c molar parts of a substructure unit **S3** of the formula (XII) 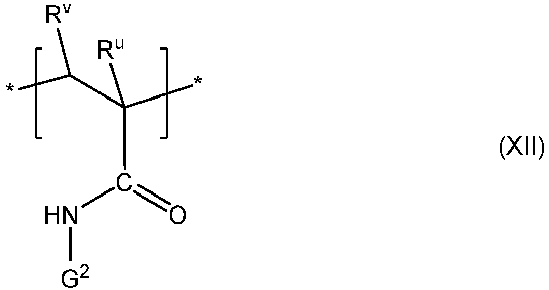
d) d molar parts of a substructure unit S4 of the formula (XIII) 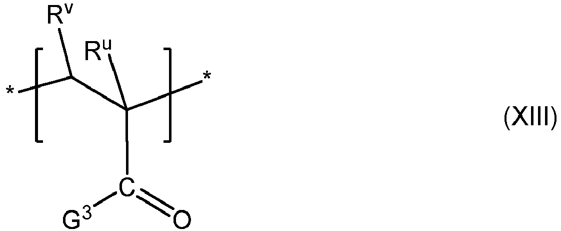 where
   L independently represents H⁺, an alkali metal ion, alkaline earth metal ion, a di- or trivalent metal ion, an ammonium ion or an organic ammonium group,
   each R^{u} independently of the others is hydrogen or a methyl group,
   each R^{v} independently of the others is hydrogen or COOM,
   r = 0, 1 or 2,
   t = 0 or 1,
   G¹ and G² is independently a C₁- to C₂₀-alkyl group, -cycloalkyl group, -alkylaryl group or is -[A'O]ₛ-G⁴,
      where A' = C₂- to C₄-alkylene, G⁴ is H, a C₁- to C₂₀-alkyl group, -cycloalkyl group or -alkylaryl group,
      and s = 2-250,
   G³ is independently NH₂, -NG⁵G⁶, -OG⁷NG⁸G⁹,
      where G⁵ and G⁶ are independently
         a C₁- to C₂₀-alkyl group, -cycloalkyl group, -alkylaryl group or -aryl group,
         or are a hydroxyalkyl group or are an acetoxyethyl group (CH₃-CO-O-CH₂-CH₂-) or a hydroxyisopropyl group (HO-CH(CH₃)-CH₂-) or an acetoxyisopropyl group (CH₃-CO-O-CH(CH₃)-CH₂-);
      or G⁵ and G⁶ together form a ring of which the nitrogen is part, in order to construct a morpholine or imidazoline ring;
      G⁷ is a C₂-C₄-alkylene group,
      G⁸ and G⁹ each independently represent a C₁- to C₂₀-alkyl group, - cycloalkyl group, -alkylaryl group, -aryl group or a hydroxyalkyl group,
   and where a, b, c and d represent molar proportions of the respective substructure units **S1, S2, S3** and **S4,** with
   a/b/c/d = (0.1-0.9) / (0.1-0.9) / (0-0.8) / (0-0.8),
   especially a/b/c/d = (0.3-0.9) / (0.1-0.7) / (0-0.6) / (0-0.4),
   preferably a/b/c/d = (0.5-0.8) / (0.2-0.4) / (0.001-0.005) / 0
   and with the proviso that a + b + c + d = 1.

The sequence of the substructure units **S1, S2, S3** and **S4** may be alternating, blockwise or random. It is also possible that the one or more substructure units **S1, S2, S3** and **S4** form a gradient structure. In principle, it is also possible that further structural units are present in addition to the substructure units **S1, S2, S3** and **S4.** In particular, the sequences of the substructure units **S1, S2, S3** and **S4** in the polymer **P** are random or statistical.

Preferably, the substructure units **S1, S2, S3,** and **S4** together have a proportion of at least 50% by weight, especially at least 90% by weight, most preferably at least 95% by weight, of the total weight of the polymer **P.**

In the polymer **P,** R^{v} especially represents hydrogen and R^{u} is preferably hydrogen and/or a methyl group.

Preferably, in the polymer **P,** r = 0 and t = 1. Also advantageously, r = 1-2 and t = 0.

More particularly, in the polymer **P,** R^{v} is hydrogen, R^{u} is a methyl group, r = 1-2 and t = 0.

G¹ and/or G² in the polymer **P,** in each case independently, are
advantageously -[A'O]ₛ-G⁴ with s = 8-200, especially 20-70, and A' is a C₂- to C₄-alkylene.
In the polymer **P,** G⁴, in each case independently, is preferably hydrogen or a methyl group.

Especially, a ratio a/b in polymer **P** is greater than the ratio of monomeric units **MC/M1** and/or a ratio of **MA/M1** in the comb polymer described above. In particular the ratio a/b in polymer **P** is in the range of 1 - 10, in particular 1.5 - 5, especially 2 - 4.

Very particularly advantageous polymers **P** are those where
a) the R^{u} and R^{v} moieties are hydrogen,
b) r = 0,
c) t = 1,
d) G¹ and G², in each case independently, are -[A'O]ₛ-G⁴ with s = 20-70 and A' = C₂-alkylene,
e) G⁴ represents a methyl group and/or
f) a/b/c/d = (0.5-0.8) / (0.2-0.4) / (0.001-0.005) / 0

Likewise advantageous polymers **P** are those where
a) t = 0 and r = 1-2,
b) G¹, in each case independently, is -[A'O]ₛ-G⁴ with s = 8-200, especially 20-70,
c) G⁴ represents hydrogen or a methyl group, especially hydrogen,
d) and/or A' is a C₂- to C₄-alkylene, especially a C₂-alkylene.

A weight-average molecular weight (Mw) of the polymer **P** is particularly in the range of 5'000-150'000 g/mol, preferably 10'000-100'000 g/mol, especially 20'000-90'000 g/mol. The weight-average molecular weight (Mw) is determined by gel permeation chromatography (GPC), using polyethylene glycol (PEG) as standard.

The preparation of polymers **P** is known per se to the person skilled in the art. Corresponding superplasticizers or polymers **P** are also commercially supplied by Sika Schweiz AG under the ViscoCrete^{®} trade name series.

Preferably, the plasticizer is used with a proportion of 0.01 - 10 wt.-%, preferably 0.05 - 5 wt.-%, more preferably 0.1 - 2 wt.-%, especially 0.25 - 1 wt.-%, with respect to the weight of the binder in the gypsum composition.

A further aspect of the present invention is a gypsum composition, especially a gypsum composition containing swelling and/or non-swelling clays, comprising a comb polymer as described above. In particular, the gypsum composition, the swelling clays and the non-swelling clays are the same as described above in connection with the use of the comb polymer.

If present, the total amount of clays, especially the total amount of swellable and non-swellable clays, in the gypsum composition is 0.01 - 5 wt.-%, especially 0.1 - 2 wt.-%, with respect to the dry weight of the gypsum composition.

Especially, the gypsum composition may additionally comprise another binder, aggregates, and/or a plasticizer as described above. As explained above, the plasticizer and the comb polymer are chemically and/or structurally different.

The plasticizer preferably is a polycarboxylate, especially a polycarboxylate ether, most preferably a polymer **P** as described above.

Especially, the gypsum composition comprises the comb polymer as described above, swelling clays and/or non-swelling clays, and a plasticizer.

According to a preferred embodiment, the gypsum composition, with respect to the weight of the binder in the gypsum composition, comprises at least 30 wt.-%, preferably at least 50 wt.-%, especially at least 70 wt.-% or 100 wt.-%, of gypsum, and 0.01 - 10 wt.-%, preferably 0.05 - 5 wt.-%, more preferably 0.1 - 2 wt.-%, especially 0.25 - 1 wt.-%, of the comb polymer as described above. Preferably, the gypsum composition, with respect to the weight of the binder in the gypsum composition, additionally comprises 0.01 - 10 wt.-%, preferably 0.05 - 5 wt.-%, more preferably 0.1 - 2 wt.-%, especially 0.25 - 1 wt.-%, of the plasticizer as described above.

The gypsum composition can furthermore contain other additives such as, for example, fibers, as well as additives of conventional components such as, for example, other plasticizers, for example, lignosulfonates, sulfonated naphthalene/formaldehyde condensates, sulfonated melamine/formaldehyde condensates, accelerators, retarders, starch, sugar, silicones, shrinkage reducers, defoamers, or foaming agents.

Preferably, in the gypsum composition a proportion of binders other than gypsum, especially cement, is below 30 wt.-%, especially below 10 wt.-%, preferably below 5 wt.-%, in each case with respect to the total weight of the binder in the gypsum composition. Most preferred the gypsum composition is cement-free.

Moreover, the present invention is concerned with a method comprising the steps of adding to a gypsum composition comprising swelling clays and/or non-swelling clays:
(i) a comb polymer as described above, and
(ii) a plasticizer as described above.

The method is in particular suitable for plasticizing a gypsum composition comprising swelling and/or non-swelling clays. The method is also suitable for retarding said composition and/or for increasing the compressive strength of said composition. The plasticizer preferably is a polycarboxylate, especially a polycarboxylate ether, most preferably a polymer **P** as described above. The plasticizer is chemically and/or structurally different from the comb polymer.

Preferably, the comb polymer is added before the addition of the plasticizer. However, it is for example also possible to add the comb polymer and the plasticizer simultaneously.

Preferably, the gypsum composition, with respect to the weight of all binders in the gypsum composition, comprises at least 30 wt.-%, preferably at least 50 wt.-%, especially at least 70 wt.-% or 100 wt.-%, of gypsum.

According to a preferred embodiment, the comb polymer of the present invention is added to the gypsum composition in an amount of 0.01 - 10 wt.-%, preferably 0.05 - 5 wt.-%, more preferably 0.1 - 2 wt.-%, especially 0.25 - 1 wt.-%, each relative to the weight of the binder in the gypsum composition. A further aspect of the present invention is related to the use of a comb polymer as described above as a clay-inerting agent and/or for reducing or inhibiting adverse effects of swelling clays and/or non-swelling clays on the effectiveness of dispersants, in particular of PCE-based dispersants, in gypsum compositions comprising swelling clays and/or non-swelling clays. Thereby, the comb polymer can e.g. be used to increase the flowability and/or the processing time of mineral binder compositions comprising swellable clays and a dispersant, in particular a PCE-based dispersant.

Further advantageous embodiments and combinations of features of the invention will emerge from the following exemplary embodiments and the totality of the patent claims.

### Exemplary embodiments

### 1. Preparation examples of comb polymers

### 1.1 Comb polymer P1 (non-ionic homopolymer produced by RAFT polymerization)

For the preparation of a non-ionic homopolymer by means of controlled free-radical polymerization, a round-bottom flask equipped with a reflux condenser, stirrer system, thermometer and a gas inlet tube was initially charged with 57.4 g of 50% methoxy polyethylene glycol₁₀₀₀ methacrylate (0.027 mol; average molecular weight: 1'000 g/mol; ∼ 20 ethylene oxide units per molecule) and 18 g of deionized water. The reaction mixture was heated to 80°C with vigorous stirring. A gentle inert N₂ gas stream is passed through the solution during the whole reaction time. 378 mg of 4-cyano-4-(thiobenzoylthio)pentanoic acid (1.35 mmol) were then added to the mixture. Once the substance had fully dissolved, 67 mg of AIBN (0.41 mmol) were added. From then on, the conversion was regularly checked by means of HPLC.

When the conversion, based on methoxy polyethylene glycol methacrylate, had reached 90%, the reaction was stopped. A clear, reddish, aqueous solution was obtained having a solids content of around 40 wt.% which was diluted with water to obtain a solids content of around 30 wt.%.

The comb polymer thus obtained is a homopolymer comprising about 20 side chain-nearing monomeric units and is referred to as comb polymer **P1.**

### 1.2 Comb polymer P2 (non-ionic homopolymer produced by conventional polymerization)

For the preparation of a non-ionic homopolymer by conventional free-radical polymerization, a round-bottom flask equipped with a reflux condenser, stirrer system, thermometer and a gas inlet tube was initially charged with 186 g of deionized water. At a temperature of 100°C, 796 g of 50% methoxy polyethylene glycol₁₀₀₀ methacrylate (0.37 mol, average molecular weight: 1'000 g/mol; ∼ 20 ethylene oxide units per molecule) was added within 180 minutes. Additionally a solution of 4.5 g sodium hypophosphite and 6.7 g of water was added within 175 minutes and a solution of 0.93 g sodium persulfate and 5.0 g water was added within 190 minutes. Once all the solutions were added, the reaction mixture was cooled down. A clear, colorless solution was obtained having a solids content of around 40 wt.% which was diluted with water to obtain a solids content of around 30 wt.%.

This polymer is referred to as comb polymer **P2.**

### 2. Gypsum compositions

Clay-free gypsum slurries were produced by mixing 106 g water with a PCE based plasticizer and/or clay-blocking additive (if used). The nature and proportions of the PCE based plasticizer and the clay-blocking additive are given in the tables in the results section. Then 200 g calcium sulfate β-hemihydrate (Bau- und Elektrikergips, Knauf), containing 0.4 g (= 0.2 wt.%, relative to the total weight of the calcium sulfate β-hemihydrate) of a calcium sulfate dihydrate accelerator was sprinkled into the water over a 15 second period, and the gypsum slurry was allowed to soak for 15 seconds. Then it was vigorously stirred by hand for 30 seconds. These gypsum slurries are referred to as **SL0.**

As a model system for argillaceous gypsum compositions, gypsum slurries similar to the gypsum slurries **SL0** have been produced whereby, instead of 200 g calcium sulfate β-hemihydrate, a mix of (200 - x) g calcium sulfate β-hemihydrate and x g of a swelling clay or x g of a non-swelling clay was used. The nature and proportions of the clays used are given below in the results section. These clay containing gypsum slurries are referred to as **SL1.**

### 3. Testing procedures

To determine the effectiveness of the clay-blocking comb polymers in the gypsum compositions, the dispersing effect of the plasticizer was determined as follows:
Directly after producing the gypsum slurries, a mini-cone of diameter 50 mm and height 51 mm was filled, and after 75 seconds (total time) the spread diameter was determined in millimeters. The diameter of the gypsum cake formed was measured as soon as flow was no longer observed. The diameter in mm was called the spread diameter.

The beginning of stiffening (VB) and the end of stiffening (VE) were determined by the knife-cut method according to DIN EN 13279-2:2014 and the thumb pressure method. The beginning of stiffening is reached if after a knife cut through the gypsum cake, the edges of the cut no longer heal. The end of stiffening occurs when water no longer escapes from the gypsum cake when finger pressure of about 5 kg is applied.

### 4. Results

Table 1 gives an overview of a first series of tests conducted and the results achieved. Experiments **EA1** to **EA9** are experiments conducted for comparative purposes with clay-free gypsum compositions **SL0.**

**Table 1 (all wt.-% are given with respect to the gypsum content in the gypsum composition)**

| **Experiment → ↓ Components** | **EA1** | **EA2** | **EA3** | **EA4** | **EA5** | **EA6** | **EA7** | **EA8** | **EA9** |
|---|---|---|---|---|---|---|---|---|---|
| **Base composition** | **SL0** | **SL0** | **SL0** | **SL0** | **SL0** | **SL0** | **SL0** | **SL0** | **SL0** |
| **Clays [wt.%]** | - | - | - | - | - | - | - | - | - |
| **Clay blocker** - Proportion [wt.-%] | - | - | **B1** 0.2 | **P1** 0.2 | **P2** 0.2 | **B2** 0.2 | **M1** 0.2 | **M2** 0.2 | **M3** 0.2 |
| **PCE plasticizer [wt.-%]** | - | 0.2 | - | - | - | - | - | - | - |
| **w/c** | 0.53 | 0.53 | 0.53 | 0.53 | 0.53 | 0.53 | 0.53 | 0.53 | 0.53 |
| **Slump flow [mm]** | 89 | 210 | 192 | 105 | 112 | 89 | 88 | 89 | 87 |
| **VB [sec]** | 115 | 190 | 380 | 115 | 120 | 125 | 120 | 115 | 120 |
| **VE [sec]** | 355 | 545 | 652 | 395 | 410 | 370 | 370 | 360 | 365 |

| | | | | | | | | | |
|---|---|---|---|---|---|---|---|---|---|
| Plasticizer = Sika^{®} ViscoCrete^{®} G-2 (Sika Deutschland GmbH) B1 = MasterSuna SBS 3890 (BASF) B2 = Floset EVA 250 L (SNF Floerger, polycation) M1 = MPEG 1'000 (methyl polyethylene glycol with M_{w} = 1'000 g/mol) M2 = MPEG 3'000 (methyl polyethylene glycol with M_{w} = 3'000 g/mol) M3 = MPGE 5'000 (methyl polyethylene glycol with M_{w} = 5'000 g/mol) | | | | | | | | | |

The data in table 1 shows that with respect to the reference example **EA1** without any plasticizer, the PCE based plasticizer (Sika^{®} ViscoCrete^{®} G-2) has a strong plasticizing effect in clay-free gypsum compositions **SL0** (example **EA2**). Likewise, the product MasterSuna **B1** (example **EA3**), a commercial product with clay-blocking properties, gives rise to a strong water-reducing effect. However, both, the PCE based plasticizer as well as the product MasterSuna have a strong retarding effect on the setting of the gypsum composition.

In contrast, inventive comb polymers **P1** and **P2** (examples **EA4** and **EA5**) show relatively small plasticizing effects, whereas the plasticizing effects of the polycation **B2** (example **EA6**) and MPEG polymers (**M1**, **M2** and **M3**) is even lower (examples **EA7** - **EA9**). Nevertheless, none of these compounds shows a significant retarding effect.

Table 2 gives an overview of a second series of tests conducted and the results achieved. Experiments **EB1** and **EB2** are reference examples whereas, experiments **EB3** to **EB8** are experiments conducted with gypsum compositions based on formulation **SL1** comprising swelling clays (bentonite). In this set of examples, the dosage of the clay blocker was adjusted to achieve a slump flow as close as possible to the reference experiment **EB2** (plasticizer in clay-free gypsum composition **SL0**).

**Table 2: Results for gypsum composition comprising swelling clays (all wt.-% are given with respect to the gypsum content in the gypsum composition)**

| **Experiment → ↓Componenrts** | **EB1** | **EB2** | **EB3** | **EB4** | **EB5** | **EB6** | **EB7** | **EB8** |
|---|---|---|---|---|---|---|---|---|
| **Gypsum composition** | **SL0** | **SL0** | **SL1** | **SL1** | **SL1** | **SL1** | **SL1** | **SL1** |
| **Bentonite [wt.%]** | - | - | 1.0 | 1.0 | 1.0 | 1.0 | 1.0 | 1.0 |
| **Clay blocker** - Proportion [wt.-%] | - | - | - | **B1** 0.2 | **P1** 0.1 | **M1** 0.8 | **M2** 0.8 | **M3** 0.8 |
| **PCE plasticizer [wt.-%]** | - | 0.2 | 0.2 | 0.2 | 0.2 | 0.2 | 0.2 | 0.2 |
| **w/c** | 0.53 | 0.53 | 0.53 | 0.53 | 0.53 | 0.53 | 0.53 | 0.53 |
| **Slump flow [mm]** | 87 | 232 | 204 | 237 | 235 | 226 | 231 | 238 |
| **VB [sec]** | 110 | 245 | 180 | 930 | 225 | 200 | 245 | 310 |
| **VE [sec]** | 350 | 540 | 465 | 1150 | 535 | 460 | 505 | 610 |

| | | | | | | | | |
|---|---|---|---|---|---|---|---|---|
| Plasticizer = Sika^{®} ViscoCrete^{®} G-2 B1 = MasterSuna SBS 3890 (BASF) M1 = MPEG 1'000 (methyl polyethylene glycol with M_{w} = 1'000 g/mol) M2 = MPEG 3'000 (methyl polyethylene glycol with M_{w} = 3'000 g/mol) M3 = MPGE 5'000 (methyl polyethylene glycol with M_{w} = 5'000 g/mol) | | | | | | | | |

As evident from the data shown in table 2, without clay blocking additives and compared to the situation in clay-free gypsum compositions (experiment **EB2**), the effectivity of the PCE based plasticizer is reduced when used in clay containing gypsum composition (experiment **EB3**). Specifically, the slump flow decreases from 232 mm to 204 mm (- 12%).

Although with a prior art clay blocker **B1** the reduction of the slump flow can be compensated with a dosage of 0.2 wt.-%, a strong retarding of the setting of the gypsum composition is observed. In contrast, with the inventive comb polymer **P1,** the loss in slump flow can be compensated with a lower dosage of only 0.1 wt.-% without any significant effect on the setting times of the gypsum composition.

With MPEG polymers **M1, M2** and **M3,** similar results are observed as with inventive comb polymer **P1,** however, a significantly higher dosage is needed (0.8 wt.-%). Thus, the inventive comb polymers clearly show the best performance.

Table 3 gives an overview of a third series of tests conducted and the results achieved. Experiments **EC1** and **EC2** are reference examples whereas, experiments **EC3** to **EC8** are experiments conducted with gypsum compositions based on formulation **SL1** comprising non-swelling clays (kaolinite). In this set of examples, the dosage of the clay blocker was adjusted to achieve a slump flow as close as possible to the reference experiment **EC2** (plasticizer in clay-free gypsum composition **SL0**).

**Table 3: Results for gypsum composition comprising non-swelling clays (all wt.-% are given with respect to the gypsum content in the gypsum composition)**

| **Experiment → ↓Components** | **EC1** | **EC2** | **EC3** | **EC4** | **EC5** | **EC6** | **EC7** | **EC8** |
|---|---|---|---|---|---|---|---|---|
| **Gypsum composition** | **SL0** | **SL0** | **SL1** | **SL1** | **SL1** | **SL1** | **SL1** | **SL1** |
| **Kaolinite [wt.%]** | - | - | 6.0 | 6.0 | 6.0 | 6.0 | 6.0 | 6.0 |
| **Clay blocker** - Proportion [wt.-%] | - | - | - | **B1** 0.2 | **P1** 0.2 | **M1** 0.2 | **M2** 0.2 | **M3** 0.2 |
| **PCE plasticizer [wt.-%]** | - | 0.2 | 0.2 | 0.2 | 0.2 | 0.2 | 0.2 | 0.2 |
| **w/c** | 0.53 | 0.53 | 0.53 | 0.53 | 0.53 | 0.53 | 0.53 | 0.53 |
| **Slump flow [mm]** | 91 | 228 | 190 | 227 | 216 | 188 | 197 | 204 |
| **VB [sec]** | 110 | 270 | 235 | 1510 | 300 | 255 | 285 | 305 |
| **VE [sec]** | 365 | 590 | 580 | 1820 | 630 | 560 | 585 | 615 |

| | | | | | | | | |
|---|---|---|---|---|---|---|---|---|
| Plasticizer = Sika^{®} ViscoCrete^{®} G-2 B1 = MasterSuna SBS 3890 (BASF) M1 = MPEG 1'000 (methyl polyethylene glycol with M_{w} = 1'000 g/mol) M2 = MPEG 3'000 (methyl polyethylene glycol with M_{w} = 3'000 g/mol) M3 = MPGE 5'000 (methyl polyethylene glycol with M_{w} = 5'000 g/mol) | | | | | | | | |

In gypsum compositions comprising non-swelling clays, similar results are observed as with gypsum compositions comprising swelling clays (cf. table 2). The prior art clay blocker **B1** gives rise to a very strong retarding effect, whereas the inventive comb polymer **P1** is essentially as effective in compensating the loss in slump flow without any significant effect on the setting times of the gypsum composition. Also with non-swelling clays, lower performance is obtained to compensate the loss in slump flow for MPEG polymers **M1, M2** and **M3.** Thus, the inventive comb polymers clearly show the best performance in gypsum compositions comprising non-swelling clays.

Table 4 gives an overview of a fourth series of tests in which the effectivity of polymers **P1** and **P2** are compared in gypsum compositions comprising swelling clays. Experiments **ED1** and **ED2** are reference examples whereas, experiments **ED3** to **ED5** are experiments conducted with gypsum compositions based on formulation **SL1** comprising swelling clays (bentonite). In this set of examples, the dosage of the clay blocker was adjusted to achieve a slump flow as close as possible to the reference experiment **ED2** (plasticizer in clay-free gypsum composition **SL0**).

**Table 4: Comparison of effectivity of polymers P1 and P2 in gypsum composition comprising swelling clays (all wt.-% are given with respect to the gypsum content in the gypsum composition)**

| **Experiment→ ↓ Components** | **ED1** | **ED2** | **ED3** | **ED4** | **ED5** |
|---|---|---|---|---|---|
| **Gypsum composition** | **SL0** | **SL0** | **SL1** | **SL1** | **SL1** |
| **Bentonite [wt.%]** | - | - | 1.0 | 1.0 | 1.0 |
| **Clay blocker** - Proportion [wt.-%] | - | - | - | **P1** 0.1 | **P2** 0.05 |
| **PCE plasticizer [wt.-%]** | - | 0.2 | 0.2 | 0.2 | 0.2 |
| **w/c** | 0.53 | 0.53 | 0.53 | 0.53 | 0.53 |
| **Slump flow [mm]** | 87 | 232 | 204 | 235 | 235 |
| **VB [sec]** | 110 | 245 | 180 | 225 | 210 |
| **VE [sec]** | 350 | 540 | 465 | 535 | 430 |

| | | | | | |
|---|---|---|---|---|---|
| Plasticizer = Sika^{®} ViscoCrete^{®} G-2 | | | | | |

As evident, with both polymers **P1** and **P2,** the slump loss caused by swelling clays can be compensated similarly with rather small dosages. Thereby, polymer **P2** is somewhat more effective than polymer **P1** since the dosage, needed to obtain the same slump loss compensation, is lower.

Table 5 gives an overview of a fifth series of tests in which the effectivity of polymers **P1** and **P2** are compared in gypsum compositions comprising non-swelling clays. Experiments **EE1** and **EE2** are reference examples whereas, experiments **EE3** to **EE5** are experiments conducted with gypsum compositions based on formulation **SL1** comprising non-swelling clays (kaolinite). In this set of examples, the dosage of the clay blocker was adjusted to achieve a slump flow as close as possible to the reference experiment **EE2** (plasticizer in clay-free gypsum composition **SL0**).

**Table 5: Comparison of effectivity of polymers P1 and P2 in gypsum composition comprising non-swelling clays (all wt.-% are given with respect to the gypsum content in the gypsum composition)**

| **Experiment → ↓Components** | **EE1** | **EE2** | **EE3** | **EE4** | **EE5** |
|---|---|---|---|---|---|
| **Gypsum composition** | **SL0** | **SL0** | **SL1** | **SL1** | **SL1** |
| **Kaolinite [wt.%]** | - | - | 6.0 | 6.0 | 6.0 |
| **Clay blocker** - Proportion [wt.-%] | - | - | - | **P1** 0.2 | **P2** 0.2 |
| **PCE plasticizer [wt.-%]** | - | 0.2 | 0.2 | 0.2 | 0.2 |
| **w/c** | 0.53 | 0.53 | 0.53 | 0.53 | 0.53 |
| **Slump flow [mm]** | 91 | 228 | 190 | 216 | 230 |
| **VB [sec]** | 110 | 270 | 235 | 300 | 210 |
| **VE [sec]** | 365 | 590 | 580 | 630 | 590 |

| | | | | | |
|---|---|---|---|---|---|
| Plasticizer = Sika^{®} ViscoCrete^{®} G-2 | | | | | |

Also with non-swelling clays, with both polymers **P1** and **P2,** the slump loss can be compensated with rather small dosages. Thereby, polymer **P2** is somewhat more effective than polymer **P1** since the slump compensation at the same dosage is higher.

Table 6 gives an overview of a sixth series of tests in which the effectivity of polymer **P2** and a polycationic clay blocker is compared in gypsum compositions comprising swelling clays. Experiments **EF1** and **EF2** are reference examples whereas, experiments **EF3** to **EF5** are experiments conducted with gypsum compositions based on formulation **SL1** comprising swelling clays (bentonite). The dosage of the clay blocker was adjusted to achieve a slump flow as close as possible to the reference experiment **EF2** (plasticizer in clay-free gypsum composition **SL0**).

**Table 6: Comparison of effectivity of polymer P2 and a polycationic clay blocker in gypsum composition comprising swelling clays (all wt.-% are given with respect to the gypsum content in the gypsum composition)**

| **Experiment → ↓ Components** | **EF1** | **EF2** | **EF3** | **EF4** | **EF5** |
|---|---|---|---|---|---|
| **Gypsum composition** | **SL0** | **SL0** | **SL1** | **SL1** | **SL1** |
| **Bentonite [wt.%]** | - | - | 1.0 | 1.0 | 1.0 |
| **Clay blocker** - Proportion [wt.-%] | - | - | - | **P2** 0.05 | **B2** 0.05 |
| **PCE plasticizer [wt.-%]** | - | 0.2 | 0.2 | 0.2 | 0.2 |
| **w/c** | 0.53 | 0.53 | 0.53 | 0.53 | 0.53 |
| **Slump flow [mm]** | 87 | 232 | 204 | 235 | 228 |
| **VB [sec]** | 110 | 245 | 180 | 210 | 195 |
| **VE [sec]** | 350 | 540 | 465 | 430 | 460 |

| | | | | | |
|---|---|---|---|---|---|
| Plasticizer = Sika^{®} ViscoCrete^{®} G-2 B2 = Floset EVA 250 L (SNF Floerger, polycation) | | | | | |

From the results of table 6 it follows that in gypsum compositions comprising swelling clays, the inventive comb polymer **P2** in terms of effectivity and retarding effects is comparable with polycationic clay blockers. However, the inventive comb polymers do not comprise any chloride.

Table 7 gives an overview of a seventh series of tests in which the effectivity of polymer **P2** and a polycationic clay blocker is compared in gypsum compositions comprising non-swelling clays. Experiments **EG1** and **EG2** are reference examples whereas, experiments **EG3** to **EG5** are experiments conducted with gypsum compositions based on formulation **SL1** comprising non-swelling clays (kaolinite). The dosage of the clay blocker was adjusted to achieve a slump flow as close as possible to the reference experiment **EG2** (plasticizer in clay-free gypsum composition **SL0**).

**Table 7: Comparison of effectivity of polymer P2 and a polycationic clay blocker in gypsum composition comprising non-swelling clays (all wt.-% are given with respect to the gypsum content in the gypsum composition)**

| **Experiment→ ↓Components** | **EG1** | **EG2** | **EG3** | **EG4** | **EG5** |
|---|---|---|---|---|---|
| **Gypsum composition** | **SL0** | **SL0** | **SL1** | **SL1** | **SL1** |
| **Kaolinite [wt.%]** | - | - | 6.0 | 6.0 | 6.0 |
| **Clay blocker** - Proportion [wt.-%] | - | - | - | **P2** 0.2 | **B2** 0.2 |
| **PCE plasticizer [wt.-%]** | - | 0.2 | 0.2 | 0.2 | 0.2 |
| **w/c** | 0.53 | 0.53 | 0.53 | 0.53 | 0.53 |
| **Slump flow [mm]** | 91 | 228 | 190 | 230 | 234 |
| **VB [sec]** | 110 | 270 | 235 | 285 | 335 |
| **VE [sec]** | 365 | 590 | 400 | 410 | 680 |

| | | | | | |
|---|---|---|---|---|---|
| Plasticizer = Sika^{®} ViscoCrete^{®} G-2 B2 = Floset EVA 250 L (SNF Floerger, polycation) | | | | | |

Thus, also in gypsum compositions comprising non-swelling clays, the inventive comb polymer **P2** in terms of effectivity and retarding effects is comparable with polycationic clay blockers.

It will be appreciated by those skilled in the art that the present invention can be embodied in other specific forms without departing from the spirit or essential characteristics thereof. The presently disclosed embodiments are therefore considered in all respects to be illustrative and not restricting.

## Claims

1. Use of a comb polymer as an inerting agent for swelling clays and/or non-swelling clays in a gypsum composition, said comb polymer comprising:
a) at least one poly(alkylene oxide) side chain-bearing monomer unit **M1** without ionic groups,
b) optionally at least one cationic monomer unit **MC,** wherein the molar ratio of the cationic monomer units **MC** to the side chain-bearing monomer units **M1** is equal to or less than 10
c) optionally at least one anionic monomer unit **MA,** wherein the molar ratio of the anionic monomer units **MA** to the side chain-bearing monomer units **M1** is less than 1, preferably equal to or less than 0.5,
d) optionally, at least one non-ionic monomer unit **M3,** wherein the molar ratio of the non-ionic monomer units **M3** to the side chain-bearing monomer units **M1** is less than 5.

2. Use according to claim 1, wherein the side chain-bearing monomer unit **M1** includes a structure of the formula I 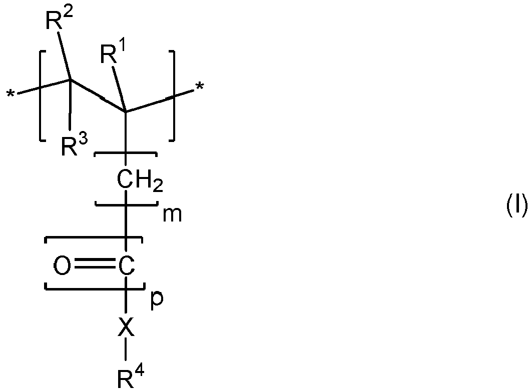 wherein
R¹, and R², in each case independently, are H or an alkyl group having 1 to 5 carbon atoms,
R³, in each case independently, is H, an alkyl group having 1 to 5 carbon atoms, preferably H or CH₃ or mixtures thereof, or a group with formula -(CH₂)ₘ-[C=O]ₚ-X-R₄,
m = 0, 1 or 2,
p = 0 or 1,
X, in each case independently, is -O- or -NH-,
R⁴ is a group of the formula -[AO]ₙ-R^{a}
where A = C₂- to C₄-alkylene, R^{a} is H, a C₁- to C₂₀-alkyl group, -cycloalkyl group or -alkylaryl group,
and n = 2-250, especially 10-200.

3. Use according to anyone of the preceding claims, wherein the cationic monomer unit **MC** in the polymer includes or consists of a monomer which has a structure of the formula II, 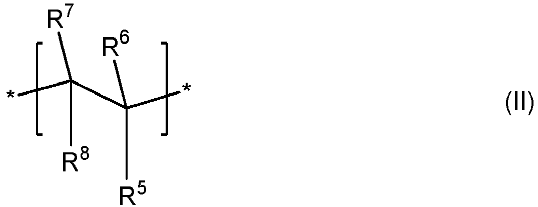 wherein
R⁵, in each case independently, is -[D]_{d}-[E]ₑ-F, with
D = -(COO)- and/or -(CONH)-,
E = an alkylene group having 1 to 5 carbon atoms,
F = -N⁺R¹⁰R¹¹R¹², -S+R¹⁰R¹¹R¹² and/or -P⁺R¹⁰R¹¹R¹²,
wherein R¹⁰, R¹¹ and R¹² are independently of one another H, an aliphatic hydrocarbon moiety having 1 to 20 C atoms, a cycloaliphatic hydrocarbon moiety having 5 to 8 C atoms and/or an aryl moiety having 6 to 14 C atoms;
whereby
d = 0 or 1,
e = 0 or 1,
R⁶, R⁷ and R⁸, in each case independently, are H or an alkyl group having 1 to 5 carbon atoms.

4. Use according to anyone of the preceding claims, wherein the anionic monomer unit **MA** in the polymer includes or consists of a monomer which has a structure of the formula III, 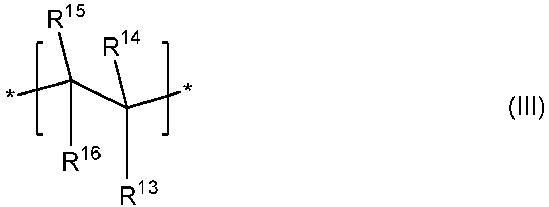 wherein
R¹³, in each case independently, is -COOM, -SO₂-OM, -O-PO(OM)₂ and/or -PO(OM)₂,
R¹⁴ and R¹⁵, in each case independently, are H or an alkyl group having 1 to 5 carbon atoms,
R¹⁶, in each case independently, are H, -COOM or an alkyl group having 1 to 5 carbon atoms,
or where R¹³ forms a ring together with R¹⁶ to give -CO-O-CO-,
M independently from each other is H⁺, an alkali metal ion, an alkaline earth metal ion, a di- or trivalent metal ion, an ammonium ion and an organic ammonium group.

5. Use according to anyone of the preceding claims, wherein the non-ionic monomer M3 has a structure of the formula IV, 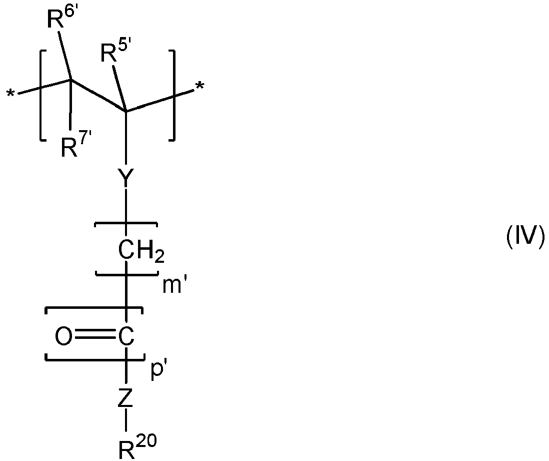 wherein
R^{5'}, R^{6'}, R^{7'} in each case independently, are H or an alkyl group having 1 to 5 carbon atoms, and m' and p' are the same as defined for m and p as described above in the context of the copolymer,
Y, in each case independently, is a chemical bond or -O-,
Z, in each case independently, is a chemical bond, -O- or -NH-,
m' = 0, 1 or 2,
p' = 0 or 1,
R²⁰, in each case independently, is an alkyl group, cycloalkyl group, alkylaryl group, aryl group, hydroxyalkyl group or acetoxyalkyl group, each having 1-20 carbon atoms.

6. Use according to any one of claims 1 to 5, wherein the comb polymer, with respect to the total number of monomer units present in the comb polymer, comprises:
a) 95 - 100 mol-%, especially 97 - 100 mol-%, particularly or 98 - 100 mol-%, preferably 99.5 mol-%, of the at least one poly(alkylene oxide) side chain-bearing monomer unit **M1,**
b) 0 - 1 mol-%, especially 0 - 0.1 mol-%, preferably 0 mol-%, of the at least one cationic monomer unit **MC,**
c) 0 - 1 mol-%, especially 0 - 0.1 mol-%, preferably 0 mol-%, of the at least one anionic monomer unit **MA,**
d) 0 - 1 mol-%, especially 0 - 0.1 mol-%, preferably 0 mol-%, of the at least one non-ionic monomer unit **M3.**

7. Use according to any one of claims 1 to 5, wherein the comb polymer, with respect to the total number of monomer units present in the comb polymer, comprises:
a) 30 - 70 mol-%, especially 40 - 60 mol-%, particularly or 40 - 50 mol-%, of the at least one poly(alkylene oxide) side chain-bearing monomer unit **M1,** and
b) 0 - 1 mol-%, especially 0 - 0.1 mol-%, preferably 0 mol-%, of the at least one cationic monomer unit **MC,**
c) 0 - 1 mol-%, especially 0 - 0.1 mol-%, preferably 0 mol-%, of the at least one anionic monomer unit **MA,**
d) 30 - 70 mol-%, especially 40 - 60 mol-%, particularly or 40 - 50 mol-%, of the at least one non-ionic monomer unit **M3.**

8. Use according to any one of claims 1 to 5, wherein the comb polymer, with respect to the total number of monomer units present in the comb polymer, comprises:
a) 10 - 99 mol-%, especially 40 - 95 mol-%, particularly or 50 - 75 mol-%, of the at least one poly(alkylene oxide) side chain-bearing monomer unit **M1,** and
b) 1 - 90 mol-%, especially 5 - 60 mol-%, preferably 25 - 50 mol-%, of the at least one cationic monomer unit **MC,**
c) 0 - 1 mol-%, especially 0 - 0.1 mol-%, preferably 0 mol-%, of the at least one anionic monomer unit **MA,**
d) 0 - 75 mol-%, especially 5 - 60 mol-%, particularly 25 - 50 mol-% or 0 mol-%, of the at least one non-ionic monomer unit **M3**.

9. Use according to anyone of the preceding claims, wherein the comb polymer essentially consists of the at least one poly(alkylene oxide) side chain-bearing monomer unit **M1** and, optionally, the non-ionic monomer unit **M3**.

10. Use according to anyone of the preceding claims, wherein the comb polymer consists of the at least one poly(alkylene oxide) side chain-bearing monomer unit **M1** and the at least one cationic monomer unit **MC**.

11. Use according to anyone of the preceding claims, wherein the comb polymer is a block polymer, whereby, at least 75 mol-%, especially at least 90 mol-%, preferably at least 99 mol-%, of the total number of the at least one side chain-bearing monomer units **M1** are arranged in a first block of the block copolymer and wherein the block copolymer comprises a second block in which at least 75 mol-%, especially at least 90 mol-%, preferably at least 99 mol-%, of the total number of the at least one cationic monomer units **MC** are arranged.

12. Gypsum composition comprising a comb polymer as defined in any one of claims 1 to 11.

13. Composition according to claim 12, **characterized in that** it comprises at least 30 wt.-%, preferably at least 50 wt.-%, especially at least 70 wt.-% or 100 wt.-%, of gypsum, and 0.01 - 10 wt.-%, preferably 0.05 - 5 wt.-%, more preferably 0.1 - 2 wt.-%, especially 0.25 - 1 wt.-%, of a comb polymer according to any of claims 1 - 11, each relative to the weight of the binder in the gypsum composition.

14. Method, in particular for plasticizing a gypsum composition, comprising the steps of adding to a gypsum composition comprising swelling clays and/or non-swelling clays (i) a comb polymer as defined in any one of claims 1 to 11, and (ii) a plasticizer for gypsum compositions.

15. Method according to claim 14, **characterized in that** the plasticizer for gypsum compositions is a polycarboxylate ether which is chemically and/or structurally different from the comb polymer.
